# EUROPÄISCHE PATENTANMELDUNG

(11) **EP 2 067 422 A2**
(43) Veröffentlichungstag der Anmeldung: **10.06.2009**
(21) Anmeldenummer: 08105735.8
(22) Anmeldetag: 05.11.2008
(51) Int. Cl.: A47J 31/44, A47J 36/02

(54) **Tropfschale für Kaffeevollautomaten**

(30) Priorität: 05.12.2007 DE 102007058374
(71) Anmelder: BSH Bosch und Siemens Hausgeräte GmbH, 81739 München (DE)
(72) Erfinder: Huber, Michael, AT-6341, Ebbs (AT); Kramer, Siegmund, 83417, Kirchanschöring (DE); Ostermaier, Albert, 83371, Stein a.d. Traun (DE); Steffl, Michael, 83250, Marquartstein (DE)

(57) **Zusammenfassung**

Eine entfernbare Tropfschale (4) aus Kunststoff für Kaffeevollautomaten mit einem außerhalb des Automaten angeordneten sichtbaren Abschnitt (6) mit einer Auflagefläche für ein Tassenaufstellblech (3) und mit einem innerhalb des Automaten angeordneten und im Betrieb nicht sichtbaren Abschnitt (7), wird dadurch weitergebildet, dass die Innenfläche der Tropfschale (4) mindestens einen Bereich (40; 42) aufweist, der aus einem Material ausgebildet ist, das vom Material der Schale (4) abweicht und das temperatur- und/oder säurebeständig ist.

## Beschreibung

Die Erfindung betrifft eine entfernbare Tropfschale aus Kunststoff für Kaffeevollautomaten mit einem außerhalb des Automaten angeordneten sichtbaren Abschnitt mit einer Auflagefläche für ein im Allgemeinen durchbrochenes Tassenaufstellblech und mit einem innerhalb des Automaten angeordneten und im Betrieb nicht sichtbaren Abschnitt. Die Tropfschale ist zu Reinigungszwecken entnehmbar angeordnet. Auch das Tassenaufstellblech, das aus beliebigem Material ausgebildet sein kann, ist in der Regel abnehmbar. Beides erleichtert die Reinigung der Tropfschale. Die gestalterische Ausführung des Tassenaufstellblechs und allgemein des sichtbaren Abschnitts der Tropfschale ist im Übrigen für die Erfindung von untergeordneter Bedeutung.

Die DE 694 023 88 D2 offenbart eine Getränkemaschine mit einer Tropfschale, die ebenfalls sowohl einen sichtbaren Abschnitt als Tassenaufstellfläche und einen innerhalb des Automaten angeordneten und im Betrieb nicht sichtbaren Abschnitt aufweist. Im nicht sichtbaren Abschnitt können Aggregate angeordnet sein, wie z. B. eine Wasserstandsanzeige. Sie wird insbesondere bei höherwertigen Geräten angeordnet, um anzuzeigen, wann die Tropfschale von Restwasser geleert werden muss.

Das Restwasser muss nicht von Getränken herrühren, die auf der Tassenaufstellfläche verschüttet werden. In den nicht sichtbaren Abschnitt der Tropfschale können auch Kanäle von Überdruckleitungen oder von einer Dampfentspannung münden, so dass überschüssiges Wasser oder Dampf in einem Bereich innerhalb der Maschine in die Tropfschale abgegeben werden kann. Die Tropfschale muss dort erheblichen Temperaturen standhalten. Bei einer Entkalkung können auch die dafür verwendeten Säuren in Verbindung mit hoher Temperatur sehr aggressiv wirken. Da sich die Säuren nach Auftreffen in der Tropfschale schnell abkühlen, tritt auch deren Belastung lokal begrenzt auf. Tropfschalen aus Metall widerstehen diesen Belastungen. Ist die Tropfschale dagegen aus designerischen oder Herstellungsgründen aus Kunststoff, so muss dafür ein spezieller widerstandsfähiger Kunststoff gewählt werden, in der Regel Polycarbonat.

Aufgabe der Erfindung ist es, die Herstellung einer Tropfschale aus Kunststoff kostengünstiger zu gestalten.

Bei der eingangs genannten entfernbaren Tropfschale aus Kunststoff wird dies erfindungsgemäß dadurch gelöst, dass die Innenfläche der Tropfschale einen Bereich oder mehrere Bereiche aufweist, die aus einem Material ausgebildet sind, das vom Material der Schale abweicht und das, da temperatur- und/oder säurebeständig, widerstandsfähiger ist. Es sind dies diejenigen Bereiche der Tropfschale, in denen z.B. der Dampf aus der Dampfentspannungseinrichtung auf die Tropfschale trifft. Die Erfindung macht sich also die Erkenntnis zu nutze, dass nicht die gesamte Innenfläche der Tropfschale, sondern nur ein oder einzelne besonders widerstandsfähige Bereiche den erhöhten Anforderungen an Temperatur- und/oder Säurebeständigkeit genügen müssen. Nur dort, wo die entsprechenden Auslasskanäle des Kaffeevollautomaten im Innenraum des Kaffeevollautomaten auf die Tropfschale gerichtet sind, muss sie widerstandsfähig ausgebildet sein. Die Erfindung verfolgt also das Prinzip, nicht die gesamte Tropfschale aus dem hochwertigen Kunststoff herzustellen, sondern bestenfalls deren höher belasteten Flächen. Dadurch reduziert sich der Aufwand für den widerstandsfähigen und daher höherwertigen, teureren Werkstoff, wohingegen die übrige Tropfschale aus einem kostengünstigeren Kunststoffmaterial gefertigt werden kann. So kann die Schale z.B. aus Polyprophylen (PP) gefertigt sein, womit sie besonders kostengünstig hergestellt werden kann. Sie kann überwiegend aus ABS (Acrylnitril-Buthadien-Styrol) ausgebildet sein, wenn optisch ansprechende Formen und Oberflächen insbesondere des sichtbaren Bereichs der Tropfschale gefordert werden. Der thermisch- und/oder durch Säure besonders belastete Bereich dagegen kann aus einem resistenteren Material, z.B. Polycarbonat oder aus Metall ausgebildet sein.

Nach einer vorteilhaften Ausgestaltung der Erfindung sind die widerstandsfähigen Bereiche auf der Innenfläche der Tropfschale lediglich aufgebracht, z.B. aufgeklebt oder aufgeschweißt. Die Tropfschale an sich bleibt also einstückig und ihrer Form nach an sich unverändert, wodurch ihre Dichtigkeit zuverlässig gewährleistet ist.

Mit der Ausbildung der besonders widerstandsfähigen Bereiche wird also das Ziel verfolgt, den teureren Werkstoff möglichst sparsam einzusetzen. Nach einer vorteilhaften Ausgestaltung der Erfindung sind daher die belasteten Flächen der Schale mit dem vom Material der Schale abweichenden Material beschichtet. Dadurch lässt sich ein besonders dünner Materialauftrag erzielen, womit die Materialkosten gering gehalten werden können.

Ein wesentlicher Aspekt der Erfindung ist die Dauerhaftigkeit der Verbindung des höherwertigen Materials mit der Tropfschale. Grundsätzlich kann das höherwertige Material aufgeklebt oder aufschweißt werden. Nach einer vorteilhaften Ausgestaltung der Erfindung sind die widerstandsfähigen Bereiche im 2-Komponenten-Verfahren an der Tropfschale angespritzt. Damit ergibt sich eine dauerhafte Verbindung zwischen dem Kunststoff der widerstandsfähigen Bereiche und dem Kunststoff der übrigen Tropfschale. Die Zweikomponententechnologie ist darüber hinaus gut beherrschbar, sodass eine derartige Herstellung der Bereiche kostengünstig möglich ist.

Nach einer weiteren vorteilhaften Ausgestaltung der Erfindung ist das Material für die widerstandsfähigen Bereiche in Vertiefungen der Tropfschale und damit bündig mit deren Innenfläche angeordnet. Dies hat zum einen optische Vorteile, weil sich eine geschlossene Oberfläche der Innenfläche der Tropfschale ergibt. Vor allem aber bei der Reinigung der Tropfschale macht sich die bündige Oberfläche positiv bemerkbar, weil keine vorspringenden Kanten zu zusätzlichen Ablagerungen führen können, die separat und in der Regel aufwendig händisch entfernt werden müssen.

Nach einer weiteren vorteilhaften Ausgestaltung der Erfindung entsprechen die Umrisse der widerstandsfähigen Bereiche denjenigen der Auftreffflächen von Dampf und/oder Substraten auf der Innenfläche der Tropfschale, die im Betrieb des Vollautomaten in die Tropfschale abgegeben werden. Da nahezu beliebige Konturen mit den genannten Herstellungsverfahren für diese Bereiche zu erzeugen sind, können sie weitgehend an die höher belasteten Flächen angepasst werden. Dies ermöglicht einen besonders wirtschaftlichen Einsatz des höherwertigen Materials, ohne unbelastete Flächen der Tropfschale abzudecken.

Alternativ zu der bisher überwiegend beschriebenen Ausführung einer Tropfschale aus einem kostengünstigen Kunststoff, in den ein widerstandsfähiges Material eingebracht wird, kann nach einer weiteren Ausgestaltungsform der Erfindung die Tropfschale bereichsweise aus einem vom Material der übrigen Schale abweichenden Material bestehen. Danach werden also nicht nur ein oder mehrere besonders belastete Bereiche als Schicht aus einem anderen Material in der Tropfschale aufgebracht. Vielmehr wird die Tropfschale an sich überwiegend aus dem kostengünstigeren Material und nur bereichsweise, aber in diesen Bereichen über ihre ganze Dicke, aus dem widerstandsfähigeren Werkstoff ausgebildet. Die beiden unterschiedlichen Materialien stoßen also in der Ebene der Tropfschale quasi stumpf aneinander. Die Tropfschale kann aber in einer einzigen Form und einem einzigen Herstellungsvorgang gefertigt werden. Damit lässt sich also verfahrensseitig eine Einsparung erzielen, wenn auch materialseitig evtl. ein geringfügig höherer Aufwand entsteht.

Die bislang dargestellten Ausführungsformen der Erfindung gingen von einer dauerhaften Verbindung der Tropfschale mit dem Material der besonders widerstandsfähigen Bereiche aus. Alternativ dazu kann nach einer weiteren vorteilhaften Ausgestaltung der Erfindung ein separater Einsatz in der Tropfschale angeordnet sein, der aus dem vom Material der Schale abweichenden Material besteht. Der Einsatz kann im einfachsten Fall lediglich aus einer flächigen Einlage bestehen, die auf dem Boden der Tropfschale in einem z.B. markierten Bereich abgelegt wird und das Material der Tropfschale gegen belastende Angriffe schützt. Zu Reinigungszwecken kann es entnommen werden, um Ablagerungen an den Randbereichen der Einlage und den entsprechenden Bereichen auf der Innenfläche der Tropfschale leicht beseitigen zu können. In einer aufwendigeren Ausgestaltung kann der Einsatz aus einer separaten Schale bestehen, die formschlüssig, aber entnehmbar in der Tropfschale angeordnet ist. Die separate Schale fängt den heißen Dampf der Kaffeemaschine und ggf. mitgeführte heiße und daher aggressive Chemikalien von Entkalkungsmitteln vollständig auf und vermeidet weitestgehend deren Kontakt mit der Tropfschale. Günstigerweise bietet der Einsatz jedoch eine fluidische Verbindung zu dem Innenraum der übrigen Tropfschale, damit sowohl das Volumen des Einsatzes als auch der verbleibende Bereich der Tropfschale sowohl für verschüttete Getränke auf der Aufstellfläche als auch für Restdampf und die überschüssigen Flüssigkeiten bei der Entkalkung zur Verfügung stehen.

Nach einer weiteren vorteilhaften Ausgestaltung der Erfindung sind die besonders widerstandsfähigen Bereiche in dem nicht sichtbaren Bereich der Tropfschale angeordnet. Dadurch kann eine Beeinträchtigung des Designs durch ein abweichendes Material vermieden werden.

Das Prinzip der Erfindung wird im Folgenden anhand einer Zeichnung beispielshalber noch näher erläutert. In der Zeichnung zeigen:
Fig. 1: eine Außenansicht eines Kaffeevollautomaten,
Fig. 2: eine schematische Darstellung der wesentlichen Elemente des Automaten,
Fig. 3: Teilansichten einer Tropfschale und
Fig. 4: eine Schnittansicht gemäß Fig. 3.

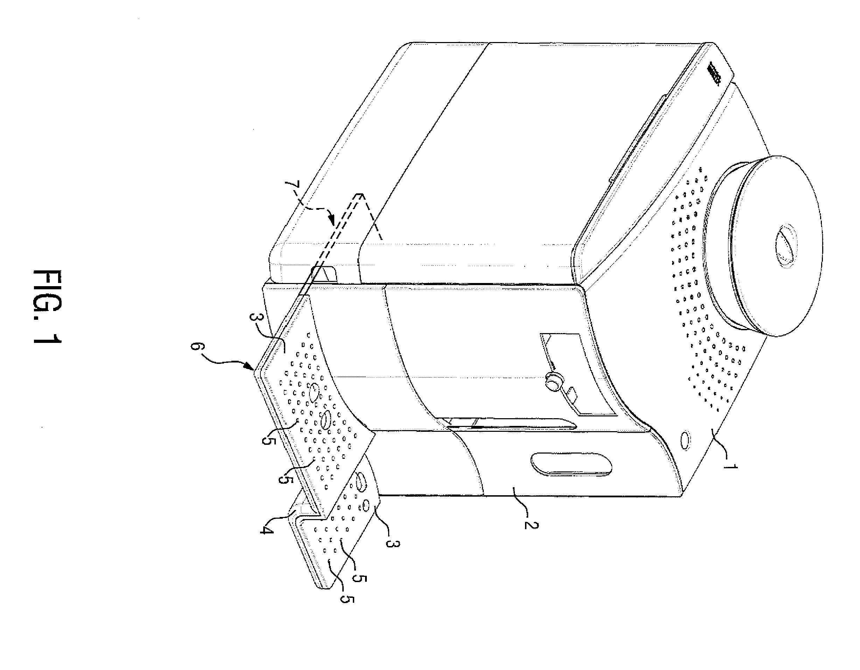

Ein Kaffeevollautomat gemäß Figur 1 umfasst ein Gehäuse 1 mit einer geschwungenen Frontseite 2, die einem Benutzer zugewandt ist. An der Frontseite 2 befinden sich ein nicht dargestellter Getränkeauslass und eine Dampfdüse, die auf eine Abstellfläche 3 gerichtet sind, auf der eine Tasse oder ein Becher abgestellt werden kann. Die Abstellfläche 3 befindet sich in einem unteren Abschnitt der Frontseite 2 und liegt auf einer Tropfschale 4 auf. Durchbrüche 5 in der Aufstellfläche 3 lassen beispielsweise verschüttete Flüssigkeiten von der Aufstellfläche 3 in die Tropfschale 4 gelangen. Die Tropfschale 4 durchbricht die Frontseite 2 und reicht in das Innere des Gehäuses 1 hinein. Sie umfasst also einen sichtbaren Abschnitt 6 auf der einem Benutzer zugewandten Seite der Frontseite 2 und einen verdeckten Abschnitt 7 im Inneren des Gehäuses 1. An den sichtbaren Abschnitt 6 der Tropfschale 4 werden daher hohe Anforderungen an die Oberflächengüte und Lackierbarkeit gestellt, da er im Sichtbereich des Benutzers liegt. Physikalisch bzw. chemisch muss der sichtbare Abschnitt 6 gegen Flüssigkeiten wie heißen Kaffee und gegen eher kurzzeitige Dampfeinwirkungen beständig sein.

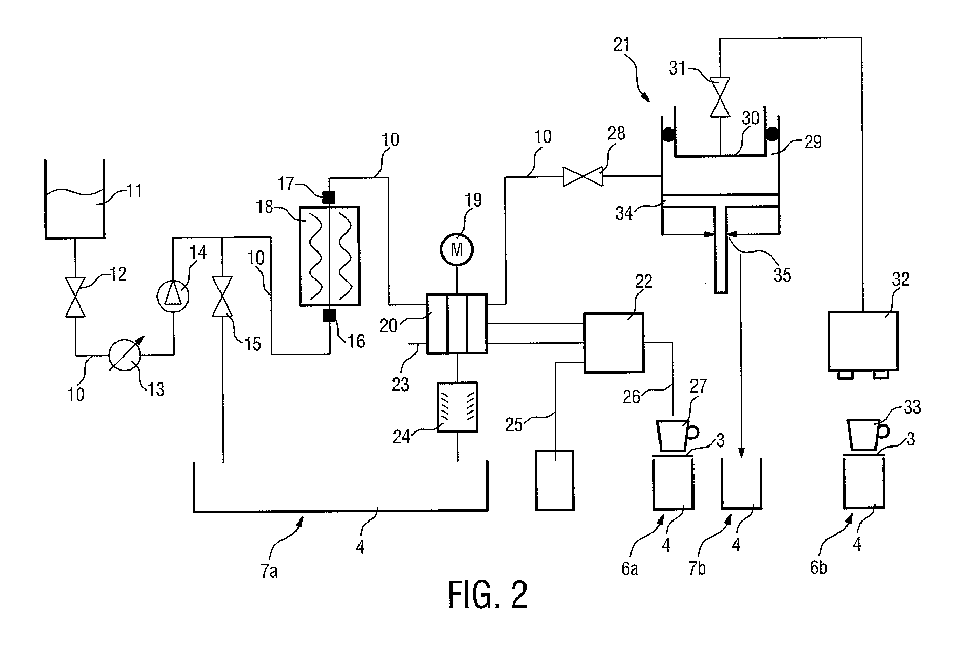

Der nicht sichtbare Abschnitt 7 der Tropfschale 4 dagegen hat weniger optischen Ansprüchen zu genügen, sondern vor allen Dingen eine hohe physikalische und chemische Beständigkeit aufzuweisen. Dies ergibt sich aus Figur 2. Darin sind die Bestandteile und Funktionen des Kaffeevollautomaten vereinfacht und schematisch dargestellt: An einem Leitungsstrang 10 für Wasser sind hintereinander ein Wassertank 11, ein Wassertankventil 12, ein Durchflussmesser 13 und eine Pumpe 14 angeordnet. Die Pumpe 14 pumpt Wasser aus dem Wassertank 11 in eine Heizeinrichtung 18, an deren Eingang und deren Ausgang jeweils ein Temperatursensor 16, 17 angeordnet ist. Zwischen der Pumpe 14 und der Heizeinrichtung 18 ist ein Überdruckventil 15 angeordnet, das bei einem auftretenden Überdruck z.B. durch Verstopfung der Heizeinrichtung 8 anspricht und für eine Druckentlastung sorgt.

Das erhitzte Wasser aus der Heizeinrichtung 18 gelangt über die Leitung 10 weiter in ein von einem Motor 19 angetriebenes Keramikventil 20. Von dort aus kann es entweder in eine Brühgruppe 21 weitergeleitet werden oder zum Aufschäumen von Milch in einer Milchschäumeinrichtung 22 verwendet werden. Dazu verfügt das Keramikventil 20 über einen Luftansauganschluss 23 und über eine Dampfentspannungseinrichtung 24 für die Abgabe von überschüssigem Dampf. Die Milchschäumeinrichtung 22 wird über eine Saugleitung 25 aus einem Milchvorrat versorgt und gibt die geschäumte Milch über eine Schaumdüse 26 in eine Tasse 27 ab.

Das Heißwasser aus dem Keramikventil 20 gelangt in der Brühgruppe 21 über ein Andockventil 28 in eine Brühkammer 29. Nach erfolgreicher Brühung durchtritt das heiße Wasser ein Brühsieb 30 und gelangt über ein Cremaventil 31 und einen Kaffeeauslauf 32 in eine bereitgestellte Tasse 33. Überschüssiger Kaffeeextrakt im Bereich eines T-Kolbens 34 kann über ein Drainageventil 35 am T-Kolben 34 abgegeben werden.

Im Laufe des Kaffeezubereitungsprozesses können an mehreren unterschiedlichen Stellen innerhalb und außerhalb des Gehäuses 1 der Kaffeemaschine Flüssigkeiten abgegeben werden, die von der Tropfschale 4 aufgefangen werden müssen. Sie ist aus Darstellungsgründen in die sichtbaren Abschnitte 6a, 6b und die nicht sichtbaren Abschnitte 7a, 7b unterteilt. Außerhalb des Gehäuses 1 des Kaffeevollautomaten werden Getränkebestandteile abgegeben, so z.B. Milchschaum durch die Schaumdüse 26 oder ein Kaffeegetränk durch den Kaffeeauslauf 32. Sie werden in die Tassen 27 bzw. 33 abgegeben, die auf der Abstellfläche 3 an der Frontseite 2 des Kaffeevollautomaten, also über dem sichtbaren Abschnitt 6a, 6b stehen. Dieser fängt z.B. beim Einschenken verschüttetes Getränk auf.

Auch innerhalb des Kaffeevollautomaten können Flüssigkeiten anfallen, die ebenso aufgefangen werden müssen. Sie werden ebenfalls in die Tropfschale 4 geleitet, damit die sowohl außerhalb als auch die innerhalb des Gehäuses 1 anfallenden Flüssigkeitsreste durch Leeren der Tropfschale 4 bequem in einem Arbeitsschritt entsorgt werden können. In dem nicht sichtbaren Abschnitt 7a der Tropfschale 4 mündet der Ausgang des Überdruckventils 15, das unter Druck stehendes kaltes Wasser führt. Physikalisch aggressiver ist der Ausgang der Dampfentspannungseinrichtung 24, der Heißdampf in diesen Abschnitt 7a der Tropfschale 4 abgeben kann. In den nicht sichtbaren Abschnitt 7b der Tropfschale 4 gelangt schließlich überschüssiges heißes Kaffeekonzentrat, das über das Drainageventil 35 aus der Brühkammer 29 abgeleitet wird. In den nicht sichtbaren Abschnitten 7a, 7b der Tropfschale 4 werden also aggressivere Flüssigkeiten aufgefangen, als in ihren sichtbaren Abschnitten 6a, 6b. In den nicht sichtbaren Abschnitten 7a, 7b muss die Tropfschale 4 daher eine höhere physikalische und chemische Beständigkeit aufweisen, als in ihrem sichtbaren Abschnitt 6. Die höhere Beständigkeit erfordert ein höherwertiges Material, das die Herstellung der Tropfschale 4 verteuert.

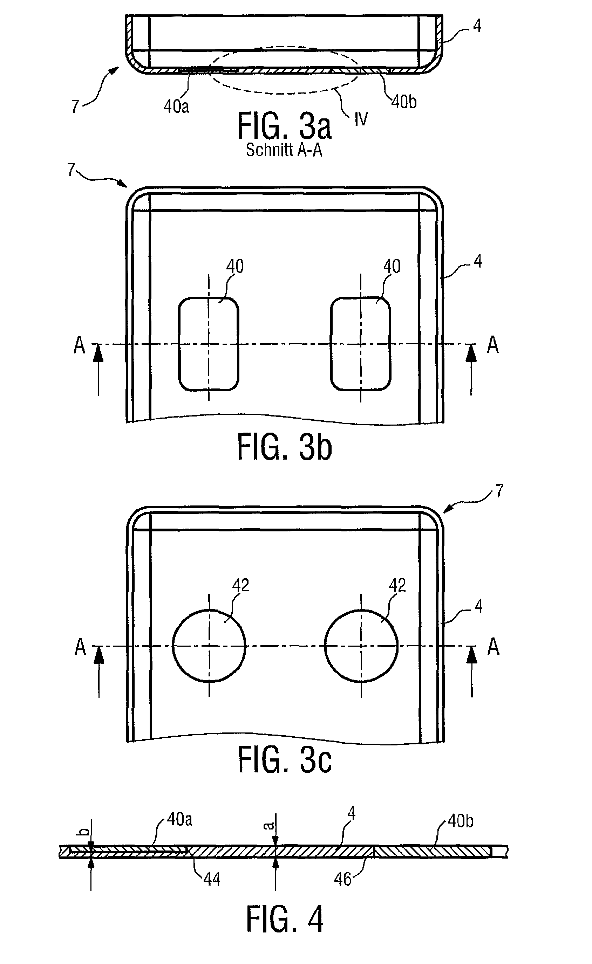

Da die physikalisch-chemischen Belastungen auch innerhalb des nicht sichtbaren Abschnitts 7 der Tropfschale 4 nur lokal auftreten, kann die Tropfschale 4 erfindungsgemäß ausgebildet sein, wie in den Figuren 3 dargestellt. Die Figur 3a stellt eine Schnittansicht einer Tropfschale 4 gemäß der Draufsichten der Figuren 3b und 3c dar. Diese Figuren zeigen Teilansichten eines im Betrieb nicht sichtbaren Abschnitts 7 der Tropfschale 4. Er hat jeweils zwei widerstandsfähige Bereiche 40, 42, die im Betrieb der Kaffeemaschine besonders hohen physikalisch-chemischen Belastungen ausgesetzt sind. Nur diese Bereiche 40, 42 sind aus einem besonders hochwertigen Kunststoff ausgebildet. Ihre Umrisse können frei gestaltet werden und orientieren sich an der Form und Größe des belasteten Bereichs. Sie müssen nicht den vollständigen Innenraum der Tropfschale 4 bedecken, da beispielsweise der Dampf sich nach Austritt aus der Dampfentspannungseinrichtung 24 schnell abkühlt und daher nur unmittelbar beim Auftreffen auf die Tropfschale 4 eine hohe thermische Belastung darstellt.

Anhand des Details in Figur 3a, das in Figur 4 vergrößert und exemplarisch dargestellt ist, wird die Montage des höherwertigen Materials in den Bereichen 40, 42 innerhalb der Tropfschale 4 erläutert. Die Tropfschale 4 besteht sowohl in ihrem sichtbaren Abschnitt 6 als auch in ihrem nicht sichtbaren Abschnitt 7 aus einem Kunststoff, der hohen Designansprüchen an Oberflächengüte und Lackierfähigkeit genügt. Ein dafür geeigneter Werkstoff ist beispielsweise Acrylnitril-Buthadien-Styrol (ABS). Er stellt das Grundmaterial der Tropfschale 4 dar. Da ABS jedoch nicht ausreichend dampf- und säurebeständig ist, sind die Bereiche 40, 42 aus widerstandsfähigem Polycarbonat (PC) ausgebildet. Dazu ist in der Tropfschale 4 eine Vertiefung 44 ausgebildet, in die in einem 2-Komponenten-Spritzgussverfahren das höherwertige Material PC zur Ausbildung des Bereichs 40a eingespritzt wird. Dadurch ergibt sich einerseits eine dauerhafte Verbindung zwischen den beiden Kunststoffen und andererseits ein ebenflächige Oberfläche der Tropfschale 4, die ihre rückstandslose Reinigung ermöglicht. Die Tropfschale 4 hat eine Wandstärke a von 3 mm, im Bereich der Vertiefung 44 dagegen eine Wandstärke von nur 1,5 mm. Im Bereich 40a wird also PC in der Dicke von 1,5 mm ergänzt und eingespritzt. Das Prinzip dieser Fertigungsmethode ergibt also eine geschlossene Form für die Tropfschale 4, die in ausgewählten Bereichen 40a eine geringere Wandstärke hat. In den Bereichen 40a wird das höherwertige Material ergänzt, sodass die Tropfschale 4 auch dort auf die sonst vorliegende Wandstärke von 3 mm kommt.

Alternativ dazu kann die Form der Tropfschale 4 in den Bereichen 40b unterbrochen sein, also zunächst Öffnungen aufweisen. Ebenfalls in einem 2-K-Verfahren wird anschließend im Bereich 40b das höherwertige PC ergänzt, sodass sich ein stumpfer Stoß zwischen dem überwiegenden Material ABS der Tropfschale 4 und dem Material PC des Bereichs 40b ergibt. Auch dadurch lässt sich eine ebenflächige Innenfläche der Tropfschale 4 erzielen, sodass sie bequem gereinigt werden kann.

Da es sich bei den vorhergehenden, detailliert beschriebenen Tropfschalen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der belasteten Bereiche in anderer Form als in der hier beschriebenen erfolgen. Ebenso kann die Tropfschale selbst in einer anderen Form ausgestaltet werden, wenn dies aus Platz- bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Gehäuse
- 2: Frontseite
- 3: Aufstellfläche
- 4: Tropfschale
- 5: Durchbrüche
- 6: Sichtbarer Abschnitt
- 7: nicht sichtbarer Abschnitt
- 10: Leitung
- 11: Wassertank
- 12: Wassertankventil
- 13: Durchflussmesser
- 14: Pumpe
- 15: Überdruckventil
- 16,17: Temperatursensoren
- 18: Heizeinrichtung
- 19: Motor
- 20: Keramikventil
- 21: Brühgruppe
- 22: Milchschäumeinrichtung
- 23: Luftansauganschluss
- 24: Dampfentspannungseinrichtung
- 25: Saugleitung
- 26: Schaumdüse
- 27: Tasse
- 28: Andockventil
- 29: Brühkammer
- 30: Brühsieb
- 31: Cremaventil
- 32: Kaffeeauslauf
- 33: Tasse
- 40, 40a, 40b, 42: widerstandsfähige Bereiche
- 44: Vertiefung
- 46: stumpfer Stoß

- a: Wandstärke der Tropfschale 4
- b: Wandstärke der Vertiefung 44

## Patentansprüche

1. Entfernbare Tropfschale (4) aus Kunststoff für Kaffeevollautomaten mit einem außerhalb des Automaten angeordneten sichtbaren Abschnitt (6) mit einer Auflagefläche für ein Tassenaufstellblech (3) und mit einem innerhalb des Automaten angeordneten und im Betrieb nicht sichtbaren Abschnitt (7), **dadurch gekennzeichnet, dass** die Tropfschale (4) mindestens einen widerstandsfähigen Bereich (40; 42) aufweist, der aus einem Material ausgebildet ist, das vom Material der Schale (4) abweicht und das temperatur- und/oder säurebeständig ist.

2. Tropfschale nach Anspruch 1, **dadurch gekennzeichnet, dass** die widerstandsfähigen Bereiche (40; 42) auf der Innenfläche der Tropfschale (4) aufgebracht sind.

3. Tropfschale nach Anspruch 1 oder 2, **dadurch gekennzeichnet, dass** die widerstandsfähigen Bereiche (40; 42) der Innenfläche mit dem vom Material der Schale (4) abweichenden Material beschichtet sind.

4. Tropfschale nach einem der obigen Ansprüche, **dadurch gekennzeichnet, dass** das Material für die widerstandsfähigen Bereiche (40; 42) im 2K-Verfahren an der Tropfschale (4) angespritzt ist.

5. Tropfschale nach einem der obigen Ansprüche, **dadurch gekennzeichnet, dass** das Material für die widerstandsfähigen Bereiche (40; 42) in Vertiefungen (44) in der Tropfschale (4) und bündig mit deren Innenfläche angeordnet ist.

6. Tropfschale nach einem der obigen Ansprüche, **dadurch gekennzeichnet, dass** die widerstandsfähigen Bereiche (40; 42) Auftreffflächen von Dampf und/oder Substraten entsprechen, die im Betrieb des Vollautomaten in die Tropfschale (4) abgegeben werden.

7. Tropfschale nach Anspruch 1, **dadurch gekennzeichnet, dass** die Schale (4) bereichsweise über ihre ganze Dicke aus einem vom Material der übrigen Schale (4) abweichenden Material besteht.

8. Tropfschale nach Anspruch 1, **gekennzeichnet durch** einen separaten Einsatz aus dem vom Material der Schale (4) abweichenden Material.

9. Tropfschale nach einem der obigen Ansprüche, **dadurch gekennzeichnet, dass** die widerstandsfähigen Bereiche (40; 42) in dem nicht sichtbaren Abschnitt (7) der Tropfschale (4) liegen.

10. Kaffeevollautomat mit einer Tropfschale (4) nach einem der obigen Ansprüche.
